# EUROPÄISCHE PATENTSCHRIFT

(11) **EP 4 388 216 B1**
(45) Veröffentlichungstag und Bekanntmachung des Hinweises auf die Patenterteilung: **02.12.2026**
(21) Anmeldenummer: 22777213.4
(22) Anmeldetag: 16.08.2022
(51) Int. Cl.: F16D 65/12

(54) **WERKSTÜCK ZUM BESCHICHTEN MIT EINER VEREDELUNGSSCHICHT, SOWIE EIN EINMESSVERFAHREN FÜR EIN WERKSTÜCK**
PIECE TO BE COATED BY A FINISHING LAYER
PIÈCE À RECOUVRIR PAR UNE COUCHE DE FINITION

(30) Priorität: 16.08.2021 DE 102021208965
(43) Veröffentlichungstag der Anmeldung: 26.06.2024
(73) Patentinhaber: HPL Technologies GmbH, 52074 Aachen (DE)
(72) Erfinder: UTSCH, Tobias Phillip, 35578 Wetzlar (DE)
(74) Vertreter: Hempfing Patentanwälte
(86) Internationale Anmeldenummer: PCT/DE2022/100604
(87) Internationale Veröffentlichungsnummer: WO 2023/020658

(56) Entgegenhaltungen:
- EP-A1- 1 204 139
- JP-A- 2005 003 176
- US-A1- 2013 277 155
- US-A1- 2017 008 142
- US-A1- 2017 122 393

## Beschreibung

Die Erfindung betrifft ein Werkstück zum Beschichten mit einer Veredelungsschicht, ein Einmessverfahren für ein Werkstück, ein Beschichtungsverfahren für ein solches Werkstück, sowie ein Wiederaufbereitungsverfahren für ein solches Werkstück mit einer verschlissenen Veredelungsschicht.

Neben der Abgasbelastung bei Verbrennungskraftmaschinen in Kraftfahrzeugen ist der Abrieb von Reifen und Bremsen von immer größerer Bedeutung bei der Einhaltung von Feinstaub-Grenzwerten, vor allem in Städten. An einer Bremsscheibe wird bei dem eigentlichen Bremsvorgang kinetische Energie des Vortriebs infolge von Reibung zwischen Bremsklotz des Bremssattels und Reibfläche der Bremsscheibe hauptsächlich in thermische Energie dissipiert. Bei dem Reibvorgang wird in einigen Belastungszuständen ein Teil des Materials der Reibfläche abgetragen und gelangt so als Feinstaub in die Umgebung. Häufig sind die Bremsscheiben aus einem Trägerkörper aus Grauguss oder Schleuderguss gefertigt. Der Trägerkörper ist witterungsanfällig und neigt zu einer schnellen Korrosion. Bei Kraftfahrzeugen ist besonders der Einsatz von Salzen gegen Eisglätte zu beachten, wodurch der Trägerkörper einer aggressiven Salzlösung ausgesetzt ist. Infolge von Abrieb und Korrosion ist die Langlebigkeit einer solchen Bremse beschränkt, woraus weitere Umweltbelastungen infolge des benötigten verfrühten Austauschs entstehen. Zudem verfügt der Trägerkörper über eine meist unzureichende Reibhärte für einen kontrollierten Bremsvorgang. Die Nachteile des Materials des Trägerkörpers lassen sich zumindest teilweise mittels einer Veredelungsschicht lösen, womit eine erhöhte Reibhärte (auf der Reibfläche) und/oder eine erhöhte Korrosionsbeständigkeit erzielbar ist. Zusätzliches Material führt zu einer erhöhten Masse. Eine erhöhte Masse schlägt sich nicht allein im Herstellungspreis der Bremsscheibe nieder, sondern auch über die Lebensdauer im Treibstoffbedarf und damit wiederum in erhöhten Abgasemissionen. Es ist daher erstrebenswert, möglichst wenig Material für die Veredelungsschicht zu verwenden.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft ein Werkstück zum Beschichten mit einer Veredelungsschicht, wobei das Werkstück einen Trägerkörper mit einer Behandlungsoberfläche aufweist, wobei auf der Behandlungsoberfläche die Veredelungsschicht aufbringbar ist oder aufgebracht ist.

Das Werkstück ist vor allem dadurch gekennzeichnet, dass auf dem Werkstück eine Bezugsmarke vorgesehen ist, zu welcher wiederholbar ein zu dem Werkstück hochpräzises ortsfestes Koordinatensystem bestimmbar ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Hier ist ein Werkstück vorgeschlagen, welches einen Trägerkörper mit einer Behandlungsoberfläche zum Beschichten mit einer Veredelungsschicht eingerichtet ist. Die Veredelungsschicht ist eine aufgetragene Schicht, welche zur Erhöhung der Reibhärte und/oder zum Korrosionsschutz des Trägerkörpers eingerichtet ist. Dabei umfasst eine Veredelungsschicht beispielsweise Metalle, metallische Verbindungen, Oxide, Nitride und/oder Karbide, welche die Reibhärte und/oder den Korrosionsschutz erhöhen.

In der US 2013 / 0 277 155 A1 ist ein Scheibenbremssystem offenbart, welches in einem Automobil mit einem Rad installiert ist. Das System umfasst einen Schwimmsattel, welcher die inneren und äußeren Bremsbeläge und einen Bremsscheibenrotor mit einer Scheibe und einem Hut trägt, wobei der Hut am Rad befestigt ist. Ein Hydraulikzylinder drückt die inneren Bremsbeläge auf die Scheibenoberfläche, wodurch der Schwimmsattel so bewegt wird, dass der äußere Bremsbelag in Kontakt mit den Scheibenoberflächen gebracht wird. Schließlich ist der Rotor aus einem Material mit einer Dicke und einem Wärmeausdehnungskoeffizienten und Wärmeleitfähigkeitskoeffizienten gefertigt, so dass ein vollständiges Bremsen aus 100 Kilometern pro Stunde mit 0,9-fachem Fahrzeuggewicht die Scheibe in der Dicke um mindestens 0,10 mm ausdehnt und die Scheibe innerhalb von 60 Sekunden nach Beendigung des Bremsens, bei einer Umgebungstemperatur von weniger als 30° C, von ihrer ausgedehnten Dicke um mindestens 0,05 mm abkühlt und schrumpft. Der Scheibenkörper hat einen Kern mit einer seitlichen Erstreckung, welcher aus einem ersten Metall besteht, und zwei Reibflächenbeschichtungen, welche auf beiden gegenüberliegenden Seiten des Kerns angebracht sind, wobei die Beschichtungen aus einem zweiten Metall bestehen und eine Dicke von 1 mm bis 10 mm aufweisen und außerdem physische Eingriffsmerkmale definieren. Zudem ist ein drittes Metall zwischen dem ersten Metall und dem zweiten Metall eingefügt, sodass das zweite Metall durch das dritte Metall metallurgisch und durch die Eingriffsmerkmale mechanisch mit dem ersten Metall verbunden ist.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft ein Werkstück zum Beschichten mit einer Veredelungsschicht, wobei das Werkstück einen Trägerkörper mit einer Behandlungsoberfläche aufweist, wobei auf der Behandlungsoberfläche die Veredelungsschicht aufbringbar ist oder aufgebracht ist.

Das Werkstück ist dadurch gekennzeichnet, dass auf dem Werkstück eine Bezugsmarke vorgesehen ist, zu welcher wiederholbar ein zu dem Werkstück hochpräzises ortsfestes Koordinatensystem, also eine Bestimmung einer Koordinate auf dem Werkstück zumindest im Bereich der Behandlungsoberfläche auf unter 1 mm in der Ebene und unter 10 µm genau wiederholbar, bestimmbar ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Hier ist ein Werkstück vorgeschlagen, welches einen Trägerkörper mit einer Behandlungsoberfläche zum Beschichten mit einer Veredelungsschicht eingerichtet ist. Die Veredelungsschicht ist eine aufgetragene Schicht, welche zur Erhöhung der Reibhärte und/oder zum Korrosionsschutz des Trägerkörpers eingerichtet ist. Dabei umfasst eine Veredelungsschicht beispielsweise Metalle, metallische Verbindungen, Oxide, Nitride und/oder Karbide, welche die Reibhärte und/oder den Korrosionsschutz erhöhen.

Der Trägerkörper ist in einer Ausführungsform eine drehmomentaufnehmende Komponente. In einer anderen Ausführungsform ist das Werkstück eine Komponente einer Vorrichtung in einer aggressiven Umgebung, beispielsweise ein Hydraulikkolben in einer Außenumgebung oder eine Turbinenschaufel in einer heißen und mit (aggressivem) Treibstoff versetzten Umgebung. Das Werkstück beziehungsweise der Trägerkörper ist dabei zur Aufnahme von mechanischen und thermischen Lasten eingerichtet und ist dementsprechend ausgeführt. Der Trägerkörper ist beispielsweise aus einer metallischen Legierung gefertigt. In einer Ausführungsform ist der Trägerkörper mehrteilig ausgeführt, beispielsweise aus verpressten und/oder vernieteten Blechen. In einer alternativen Ausführungsform ist der Trägerkörper aus einem Lamellengrauguss oder Schleuderguss urgeformt und/oder als Integralteil ausgeführt. Dabei umfasst der Trägerkörper eine Behandlungsoberfläche, welche zur Aufnahme der Veredelungsschicht eingerichtet ist, beziehungsweise auf welcher die Veredelungsschicht bereits aufgetragen ist.

Bei Vorgang des Beschichtens der Behandlungsoberfläche mit der Veredelungsschicht besteht (in Grenzen) zumindest eine Unsicherheit (Toleranz bis Ausschuss) bezüglich der Menge und Verteilung von aufgebrachtem Material. Weiterhin besteht eine Unsicherheit hinsichtlich der Güte der Behandlungsoberfläche, also der Rauigkeit, der Planheit, Welligkeit und Neigung der Fläche (beispielsweise sogenannte Schirmung bei einer Bremsscheibe). Weiterhin besteht eine Unsicherheit hinsichtlich der Einspannung des Werkstücks in dem Werkzeugfutter der Behandlungsvorrichtung, also der relativen Lage zu einer Beschichtungseinheit. Darüber hinaus können (beispielsweise aufgrund des thermischen Eintrags beim Beschichten) beim Vorgang des Beschichtens (neue) Verformungen an dem Werkstück auftreten.

Bisher wurden solche Effekte als Toleranzen eingepreist und mittels entsprechender Vorbereitung (Abdrehen mit enger Toleranz), (erhöhter) Schichtdicke der Veredelungsschicht und Nachbereitung (Abschleifen von viel überschüssigem Material) ausgeglichen.

Hier ist nun vorgeschlagen, an dem Werkstück eine Bezugsmarke vorzusehen. Die Bezugsmarke ist dabei auf dem Werkstück derart angeordnet, dass mittels der Bezugsmarke ein hochpräzises ortsfestes Koordinatensystem auf dem Werkstück bestimmbar ist. Die Bezugsmarke ist in einer Ausführungsform derart ausgeführt, dass die Informationen zu individuellen Eigenschaften des Werkstücks beziehungsweise der Behandlungsoberfläche (bevorzugt maschinell) wiederholbar auffindbar sind, beziehungsweise eingemessene Daten auf dem Werkstück auch nach einem Umspannen lokalisierbar sind. Beispielsweise lässt sich in einem unabhängigen Qualitätsprüfungsschritt (beispielsweise nach einer Transportstrecke auf einem Fließband) zumindest Stichproben-artig oder zu 100 % prüfen, ob die angestrebte Qualität der Bremsscheibe beziehungsweise der Veredelungsschicht erreicht ist. Eine solche Prüfung kann zerstörungsfrei und auf Basis der eingemessenen Daten ausgeführt werden.

Es sei darauf hingewiesen, dass die Bezugsmarke für ein hochpräzises ortsfestes Koordinatensystem eingerichtet ist. Das heißt, dass eine Bestimmung einer Koordinate auf dem Werkstück (zumindest im Bereich der Behandlungsoberfläche) erfindungsgemäß auf unter 10 µm [zehn Mikrometer], bevorzugt unter 2 µm, genau wiederholbar bestimmbar ist.

Mit einer solch hohen Präzision lassen sich Fehler beziehungsweise Unregelmäßigkeiten in der Veredelungsschicht mit Relevanz für eine kosteneffiziente Fertigung sicher lokalisieren.

Eine geeignete Messeinheit nutzt beispielsweise ein Laser-Triangulationsverfahren (beispielsweise mittels einer Laser-Profilometrie oder einem Laserscanning) oder Ultra-Schall-Messungen. Unter Umständen ist eine taktile Messung ausreichend. In einer Ausführungsform ist die Flächenmessung taktil und die Höhenmessung optisch ausgeführt.

In einer Ausführungsform ist die Bezugsmarke ein Merkmal auf außenseitig beispielsweise dem Außenrand und/oder auf den gering belasteten Komponenten des Werkstücks angeordnet. Unter Annahme eines (ausreichend) starren Werkstücks ist das Koordinatensystem dann im Vergleich zu (neuen) Messergebnissen ermittelbar ist. In einer Ausführungsform ist die Bezugsmarke ein einmessbare Markierung (beispielsweise nach Arte eines Fadenkreuzes) ausgeführt, sodass sich eingemessene Daten eineindeutig aus der Bezugsmarke selbst beziehen. Eine Einmessung ist damit nicht notwendig. Unter der Annahme, dass die (eineindeutige) Bezugsmarke an einem unveränderlichen Ort ist (beispielsweise an dem für die Montage relevanten Ort) lässt sich somit eine eventuelle Verformung des Werkstücks durch (neue) Einmessung im Vergleich zu der Bezugsmarke selbst und/oder im Vergleich zu den (gespeicherten) Einmessdaten aus einem vorigen Einmessverfahren. In einer Ausführungsform ist die Bezugsmarke selbst einer (möglichen) Verformung unterzogen (beispielsweise als ein vorbestimmtes Kreuz) und in einem im Betrieb oder in der Fertigung belasteten Bereich des Werkstücks angeordnet. Dann lässt sich die Verformung der Bezugsmarke (also beispielsweise des Kreuzes) feststellen und damit auf eine Verformung im Bereich der Bezugsmarke rückschließen. In einer Ausführungsform sind zwei oder alle Ausführungsformen miteinander kombiniert, gegebenenfalls redundant für eine erhöhte Sicherheit der Messung und/oder eine erhöhte Präzision der Messung.

Mittels der Bezugsmarke ist zum gezielten Anfahren einer Messeinheit an das Werkstück nutzbar. So ist beispielsweise ein abgespeichertes Modell des Werkstücks mit der Veredelungsschicht in der Messeinheit abgespeichert, wobei bevorzugt innerhalb des Modells die Schichtstärke beziehungsweise die Schichtstärken einzelner (zeitlich nacheinander und/oder mit unterschiedlichem Material gebildete) Lagen der Veredelungsschicht abgebildet sind. Bevorzugt umfasst das Werkstück oder die Bezugsmarke zudem eine Identifikationsmarke, welche erlaubt das Werkstück zu einem abgespeicherten Modell zuzuordnen. Das Modell ist beispielsweise aus einer Punktwolke, welche durch einzelne gemessene, empirisch oder mathematisch korrigierte und/oder extrapolierte Messpunkte.

Es wird weiterhin in einer vorteilhaften Ausführungsform des Werkstücks vorgeschlagen, dass das Werkstück ein Rotationswerkstück mit einer Rotationsachse ist,
bevorzugt eine Bremsscheibe für ein Kraftfahrzeug.

Das Werkstück ist rotationssymmetrisch als ein Rotationswerkstück ausgeführt, wobei das Rotationswerkstück um eine Rotationsachse ausgeführt ist. Die mechanischen und thermischen Belastungen des Werkstücks sind aufgrund der Rotationssymmetrie gut aufnehmbar beziehungsweise ableitbar, sodass eine mechanische Überbelastung oder eine Temperaturspitze innerhalb des Werkstücks ausschließbar ist. In einer Ausführungsform ist das Werkstück als ein Hydraulikkolben mit einer Veredelungsschicht ausgeführt, sodass mittels der Veredelungsschicht die mechanische und chemische Belastung aufgrund der öligen Umgebung und der mechanischen Last gut widerstehbar ist.

In einer bevorzugten Ausführungsform ist das Werkstück als eine (rotationssymmetrische) Bremsscheibe für ein Kraftfahrzeug ausgeführt. Die Bremsscheibe ist im Betrieb in einem Kraftfahrzeug hohen mechanischen (Reibung) und thermischen Belastungen ausgesetzt und entsprechend der obigen Beschreibung ausgeführt. Dabei ist die Bremsscheibe mit einer Radnabe eines Fahrzeugrads fest verbunden und ist und somit von einem am Fahrzeugrahmen befestigten Bremssattel mittels dessen Bremsklötzen mittels Reibung auf der Bremsscheibe beziehungsweise einem Teil der Bremsscheibe des Werkstücks entschleunigbar. Dabei ist die Veredelungsschicht derart eingerichtet, dass eine Korrosion unterbunden ist und der Abrieb vermindert wird.

Der Trägerkörper ist hier beispielsweise nach radial-außen derart ausgeführt, dass dieser eine Fase an einem Außenrand der Bremsscheibe umfasst. Im Bereich der Fase, also im Bereich der dort nach axial-innen geneigten Behandlungsoberfläche, ist die Veredelungsschicht derart aufgetragen, dass diese die Fase nach radial-außen horizontal überragt und der Fase nur bedingt folgt. Es sei darauf hingewiesen, dass die Veredelungsschicht dabei nicht den Außenrand der Bremsscheibe überragt, sondern nur den horizontalen Anteil der Behandlungsoberfläche nach radial-außen weiter horizontal fortsetzt.

Es wird weiterhin in einer vorteilhaften Ausführungsform des Werkstücks vorgeschlagen, dass die Veredelungsschicht eine Hartstoffschicht für eine Reibfläche des Werkstücks ist.

Um den hohen mechanischen (Reibung) und thermischen Belastungen, welche im Betrieb an dem Werkstück anliegen, zu widerstehen, ist hier vorgeschlagen, dass die Veredelungsschicht aus einer Hartstoffschicht gebildet ist. Die Hartstoffschicht ist eine Schicht aus Ausbildungen von intermetallischen Phasen (bevorzugt Karbide, besonders bevorzugt Niob [Nb], Silizium [Si], Chrom [Cr], Wolfram [W] und/oder Titan [Ti]), wobei mittels der Hartstoffschicht eine Reibfläche auf dem Werkstück ausgebildet ist. Mittels der Hartstoffschicht ist eine Erhöhung der Härte im Bereich der Reibfläche darstellbar. Dabei ist eine Erhöhung der Härte in einer bevorzugt Ausführungsform beispielsweise den Faktor 5 im Vergleich zu der metallischen Legierung, welche den Trägerkörper bildet, erreichbar.

Die Reibfläche ist in der Ausführungsform als Bremsscheibe zur Drehmomentaufnahme beziehungsweise zur Dissipation von kinetischer Energie im Zusammenspiel mit einem Bremsklotz eingerichtet. Dabei ist mittels der Reibfläche und dem Bremsklotz ein Reibpaar gebildet. Im Betrieb als Bremse ist eine hohe Härte im Bereich der Reibfläche vorteilhaft, weil damit der Abrieb (und damit Feinstaub) reduzierbar ist und die Lebensdauer gesteigert wird.

Es sei darauf hingewiesen, dass mit einer exakten Vermessung der Veredelungsschicht und gegebenenfalls der Behandlungsoberfläche im Vorfeld des Beschichtungsverfahrens die Menge an Beschichtungsmaterial und gegebenenfalls die Anzahl einzelner Lagen reduzierbar ist. Dass dabei dennoch eine zuverlässige Veredelungsschicht erzeugt ist, lässt sich dann unabhängig von kundenseitigen Versuchen auf Dauerlauf-Testständen und/oder zerstörender Prüfung belegen, beispielsweise indem ein Kunde mit der Bezugsmarke als Referenz zumindest die Oberfläche der Veredelungsschicht nachmessen und mit den gespeicherten Daten vergleichen kann. Bei einer zerstörenden Prüfung lässt sich eine (beispielsweise mikroskopisch) zu prüfende Schnittfläche bei einem besonders kritischen Punkt (beispielsweise nah an einer Toleranzgrenze der Schichtstärke oder Schichtzusammensetzung) bilden, indem der Schnitt auf Basis der Bezugsmarke als Referenz gebildet wird.

Ein weiterer Aspekt ist, dass unter Umständen in der Vorbereitung der Behandlungsoberfläche eine Fertigungspräzision erhöht oder verringert werden kann, weil im ersten Fall dann eine noch dünnere Beschichtung ermöglicht ist oder im zweiten Fall die Toleranzen durch eine erforderliche Schichtdicke im Zusammenspiel mit einer zulässigen Toleranz der Schichtdicke ausgleichbar sind.

Es wird weiterhin in einer vorteilhaften Ausführungsform des Werkstücks vorgeschlagen, dass die Bezugsmarke über eine vorgesehene Lebensdauer des Werkstücks erhalten bleibt,
wobei bevorzugt die Bezugsmarke noch bei einer Wiederaufbereitung des Werkstücks beziehungsweise der Veredelungsschicht erhalten ist.

Ein jedes Werkstück weist aufgrund der im Betrieb vorherrschenden mechanischen und thermischen Lasten eine vorbestimmte beziehungsweise maximale Lebensdauer auf. Somit muss das Werkstück nach der vorbestimmten Lebensdauer, beispielsweise eine Bremsscheibe um die Bremsleistung (also den Reibkoeffizient im Reibpaar) im Betrieb sicherzustellen, ausgetauscht werden. Weiterhin ist diese maximale Lebensdauer (meist empirisch) durch den Hersteller oder gesetzlich vorgegeben und zu einem hohen Prozentsatz könnte die Bremsscheibe zu diesem Zeitpunkt noch weiter verwendet werden. Die Bezugsmarke erlaubt, Messdaten zu erstellen und mit den gespeicherten Messdaten zu vergleichen (zumindest bei den kritischsten Punkten) und so (zumindest mit hoher Sicherheit) feststellen zu können, ob eine maximale Abnutzung vorliegt oder noch eine relevante Nutzungsdauer verfügbar bleibt. Damit können erhebliche Kosten (beispielsweise in einem pauschalisierten Wartungsvertrag wie beim Leasing üblich) eingespart werden und nicht zuletzt die Umweltkosten reduziert werden.

In einer bevorzugten Ausführungsform ist die Bezugsmarke derart angeordnet, dass bei einer Wiederaufbereitung des Werkstücks und/oder der Veredelungsschicht die Bezugsmarke weiterhin erhalten ist. Beispielsweise wird in einem Wiederaufbereitungsverfahren die Veredelungsschicht abgetragen, sodass eine neue Veredelungsschicht auftragbar ist; denn der Trägerkörper ist dann meist noch unbeschädigt oder zumindest ausreichend intakt oder mit geringem Aufwand wieder Instand setzbar. Der Trägerkörper ist also auch dann, wenn die Veredelungsschicht grenzwertig abgenutzt beziehungsweise verschlissen ist noch wiederverwendbar. Es ist also eine Wiederaufbereitung des Werkstücks darstellbar.

Um eine Verformung beziehungsweise einen Abtrag von einer verbleibenden oder verbliebenen Veredelungsschicht und/oder des Trägerkörpers, welche im Betrieb während der (ersten) Lebensdauer auftreten können, messtechnisch zu erfassen, ist hier vorgeschlagen, dass die Bezugsmarke über eine (erste) vorgesehene Lebensdauer erhalten bleibt. Dabei ist die Bezugsmarke derart auf dem Werkstück angeordnet, dass diese im Betrieb weiterhin zum Referenzieren des aktuellen Zustands der Veredelungsschicht beziehungsweise der Behandlungsoberfläche oder auch eines anderen relevanten Teils des Trägerkörpers nutzbar ist.

In einer Ausführungsform ist aufgrund von hohen thermischen Belastungen des Werkstücks eine (irreversible) Verformung des Werkstücks aufgetreten, sodass diese Verformung bei einer Wiederaufbereitung der Veredelungsschicht berücksichtigt wird. Beispielsweise wird bei der Wiederaufbereitung die alte (zum Teil noch erhaltene) Veredelungsschicht abgetragen, um dabei den Trägerkörper nicht oder nur zu einem minimalen Teil mit abzutragen. Die Information für den Vergleich, um die (eventuelle) Verformung erfassen zu können ist mittels der Bezugsmarke eineindeutig zu der vorigen beziehungsweise ursprünglichen Form des Werkstücks referenzierbar.

Es wird weiterhin in einer vorteilhaften Ausführungsform des Werkstücks vorgeschlagen, dass das Werkstück eine Bremsscheibe ist und die Bezugsmarke angeordnet ist an zumindest einem der folgenden Abschnitte der Bremsscheibe:
- im Bereich des Schwanenhalses;
- im Bereich der Lüftungsrippen zwischen den zwei Reibscheiben der Bremsscheibe in innen-gekühlter Ausführungsform, bevorzugt radial-außenseitig;
- am Außenrand der Bremsscheibe;
- an der Radnabe radial-außen oder radial-innen mantel-seitig, axial-innen oder axial-außen stirn-seitig;
- in der Behandlungsoberfläche; und
- in einer oder als eine Wuchtungsmarke.

Hier ist nun vorgeschlagen, dass mit dem Werkstück als eine Bremsscheibe einer Scheibenbremse, im Bereich von Kraftfahrzeugen meist mit einer innenliegenden Kühlung, die Bezugsmarke gut auslesbar und dauerhaft auslesbar angeordnet ist. Bei einer Bremsscheibe mit innenliegender Kühlung sind mit einem axialen Abstand zueinander zwei Reibscheiben mit radialen Lüftungsrippen miteinander verbunden, sodass Abwärme effizient mittels intrinsischer erzwungener Konvektion abtransportierbar ist. Weiterhin weisen die meisten Bremsscheiben im Bereich von Kraftfahrzeugen einen nach radial-innen zur Radnabe hinreichenden sogenannten Schwanenhals auf, mittels welchem der Radnaben-Flansch mit der Reibscheibe beziehungsweise den Reibscheiben verbunden ist.

In einer Ausführungsform ist die Bezugsmarke im Bereich des Schwanenhalses angeordnet, sodass die Bezugsmarke nicht oder nicht vollständig mit der Veredelungsschicht in Kontakt steht. Dabei ist ein Abtragen der Bezugsmarke im Betrieb der Bremsscheibe ausgeschlossen, weil im Bereich des Schwanenhalses kein Bremsklotz ansetzt beziehungsweise keine Bremsreibung entsteht.

Alternativ oder zusätzlich ist die Bezugsmarke (bei einer innen-gekühlten Scheibenbremse) im Bereich der Lüftungsrippen zwischen den zwei Reibscheiben angeordnet. Bevorzugt ist die Bezugsmarke radial-außenseitig angeordnet. Beispielsweise wird bei einem Extremhochgeschwindigkeits-Laserauftragschweißen [EHLA] der Auftragslaserstrahl senkrecht oder mit einem leichten Neigungswinkel zu einer Flächennormalen auf die im Werkzeugfutter eingespannte Bremsscheibe gerichtet, und so die Veredelungsschicht auf die Behandlungsoberfläche aufgetragen. Die Messeinheit zum Ermitteln von Verformungen und/oder von Schwankungen in der Schichtstärke der Veredelungsschicht ist dazu in der Sichtlinie der Lüftungsrippen mit der Messeinheit angeordnet, und somit die Bezugsmarke in gerader Sichtlinie von radial-außen einsehbar angeordnet ist. Damit ist ein Erfassen während des Auftragens beziehungsweise Abtragens ermöglicht.

Alternativ oder zusätzlich ist die Bezugsmarke am Außenrand der Bremsscheibe angeordnet. Mit dem Außenrand ist hier die Fläche mit radial ausgerichteter Flächennormale gemeint. In einer alternativen Ausführungsform ist von dem Außenrand auch eine Fase umfasst mit einer Flächennormale unter einem Winkel hin zu der axialen Richtung, wobei bevorzugt hier keine oder keine im Betrieb unmittelbar belastete Veredelungsschicht aufgebracht ist.

Alternativ oder zusätzlich ist die Bezugsmarke an der Radnabe radial-außen oder radial-innen mantel-seitig, axial-innen oder axial-außen stirn-seitig angeordnet. Hier ist ebenfalls Abrieb im Betrieb ausgeschlossen, weil der Bremsklotz nicht in Kontakt mit der Bremsscheibe steht. bei einer stirn-seitigen Anordnung ist bevorzugt eine Fügefuge (Spalt) gebildet, wobei diese Fläche infolge einer Dichtwirkung dieses Spalts gegenüber Spritzwasser gut vor Korrosion geschützt ist.

Alternativ oder zusätzlich ist die Bezugsmarke derart ausgeführt, dass diese eine entsprechende Tiefe aufweist, welche über die Schichtstärke der Veredelungsschicht hinausreicht. Beispielsweise ist die Bezugsmarke mit einem Schneidwerkzeug in die Behandlungsoberfläche, also unterhalb der Veredelungsschicht angeordnet, sodass erst bei einem Abtragen der Veredelungsschicht die Bezugsmarke (wieder) sichtbar wird oder (vor allem bei einer relativ zu der Behandlungsoberfläche senkrechten Anordnung der Messeinheit) die Bezugsmarke von der Veredelungsschicht mit abgeformt und so weiterhin sichtbar ist.

Alternativ oder zusätzlich ist die Bezugsmarke in einer Wuchtungsmarke angeordnet beziehungsweise in diese integriert oder als eine Wuchtungsmarke ausgeführt. Wuchtungsmarken werden beim Ausgleichen einer Unwucht in das Material (den Trägerkörper) der Bremsscheibe eingebracht, beispielsweise gefräst. Dies wird oftmals vor dem Beschichtungsverfahren durchgeführt, sodass also die Bezugsmarke bei dieser Ausführungsform schon vor dem Beginn des Beschichtungsverfahrens eingebracht ist.

Es sei darauf hingewiesen, dass eine Mehrzahl von Bezugsmarken auf der Bremsscheibe anordenbar sind, sodass eine Kombination von zwei oder mehr Ausführungsformen darstellbar ist. Dabei ist in einer bevorzugten Ausführungsform eine Mehrzahl von Bezugsmarke auf der Bremsscheibe angeordnet, wobei die Mehrzahl zu einer genauen (beziehungsweise im Vergleich zu einer einzigen Bezugsmarke genaueren) messtechnischen Erfassung von Abweichungen der Bremsscheibe von der Soll-Bremsscheibe ermöglicht.

Es sei darauf hingewiesen, dass bei einer Bezugsmarke, welche beim Beschichten sichtbar beziehungsweise einmessbar ist, auch eine Lageveränderung der Bezugsmarke als Information über eine Verformung des Werkstücks nutzbar ist, sofern die Annahme ausreichend korrekt ist, dass die relative Lage zu dem Werkzeugfutter konstant ist. Zusammen mit empirischen Daten und/oder weiteren Messdaten kann dann auf die Verformung des Werkstücks geschlossen werden. Beispielsweise bei einer axialen Lageänderung der Bezugsmarke am Außenrand einer Bremsscheibe während eines thermischen Beschichtens ist ein (unter Umständen hinreichender) Hinweis auf eine (Verstärkung der) Schirmung der Behandlungsoberfläche.

Gemäß einem weiteren Aspekt wird ein Einmessverfahren für ein Werkstück vorgeschlagen, aufweisend die folgenden Schritte:
**a.** Einspannen in ein Werkzeugfutter, ein Werkstück mit einer Behandlungsoberfläche zum Beschichten mit einer Veredelungsschicht;
**b.** Einbringen in dem Werkstück und Erfassen einer Bezugsmarke und Referenzieren der Bezugsmarke zu dem Werkzeugfutter; und
**c.** nach Schritt **a.,** Einmessen des Werkstücks mittels einer Messeinheit referenziert zu der Bezugsmarke.

Für die oben genannte Aufgabenstellung ist hier ein Einmessverfahren vorgeschlagen, bei welchem eine Bezugsmarke auf dem Werkstück derart angeordnet ist, dass eine vorbestimmte Vermessung des Werkstücks mittels einer Messeinheit ausführbar ist. Es wird ohne Ausschluss der Allgemeinheit rein der Übersichtlichkeit halber insoweit auf die obige Beschreibung des Verfahrens mit Bezug auf das dort beschriebene Werkstück mit einer zu beschichtenden Behandlungsoberfläche verwiesen.

Hier ist vorgeschlagen, dass in Schritt **a.** das Werkstück in ein Werkzeugfutter eingespannt wird. Zudem ist das Werkstück zum Beschichten der Behandlungsoberfläche eingerichtet. Beispielsweise ist die Behandlungsoberfläche mittels Sandstrahlen und/oder Karbid-Strahlen derart vorbereitet, dass eine Veredelungsschicht gut an der Behandlungsoberfläche anhaftet. Das Werkzeugfutter ist eine Einspannvorrichtung für eine zuverlässige dauerhafte Lage des Werkstücks in der Einmessvorrichtung beziehungsweise einer Beschichtungsvorrichtung, in welcher neben dem Einmessen auch das Beschichten ausführbar ist.

In einer Ausführungsform wird nach Schritt **a.** in Schritt **b.** die Bezugsmarke erfasst. In einer Ausführungsform ist die Bezugsmarke bereits in einem vorherigen Schritt auf das Werkstück angeordnet worden und wird nun in Schritt **b.** erfasst. In einer alternativen Ausführungsform wird der (Gesamt-) Schritt **b.** vor Schritt **a.** ausgeführt oder in einem Teilschritt **b1.** die Bezugsmarke eingebracht und in einem Teilschritt **b2.** gleichzeitig mit Schritt **a.** die Bezugsmarke erfasst, und bevorzugt zum exakten Ausrichten des Werkstücks in dem Werkzeugfutter genutzt.

Beispielsweise wird mittels eines Schneidwerkzeugs die Bezugsmarke in das Werkstück eingebracht oder alternativ oder zusätzlich eine Bezugsmarke additiv auf das Werkstück aufgebracht, beispielsweise mittels Auftragschweißen.

Es sei darauf hingewiesen, dass die Bezugsmarke in beiden Ausführungsformen zu dem Werkzeugfutter in Referenz gesetzt ist, wobei das Werkzeugfutter ein externes (Maschinen-) Koordinatensystem umfasst. Mittels des Werkzeugfutters und der dazu angeordneten Bezugsmarke ist also ein wiederholbares Referenzieren des Werkstücks an einer Messeinheit ausführbar. In einer Ausführungsform ist das Aufnehmen der Bezugsmarke eine statische Aufnahme zum Referenzieren des Werkstücks zu dem Werkzeugfutter (also in das Maschinen-Koordinatensystem). In einer anderen Ausführungsform wird die Bezugsmarke und also Ihre Lage dauerhaft in einem Bearbeitungsprozess (beispielsweise während eines Abdrehens, Beschichtens und/oder Schleifens, beispielsweise einer Bremsscheibe) wiederholt, beispielsweise bei jeder Vorbeifahrt an einem spezifischen Messsensor, eingemessen und so dynamisch eine Lageänderung und somit eine Verformung des Werkstücks erfasst. Aufgrund der zeitlichen Auflösung der dynamischen Erfassung ist die Ursache (empirisch) bekannt und daraus kann mit einem geringen Messaufwand eine komplexe Verformung ermittelbar, beispielsweise die sogenannte Schirmung bei einer Bremsscheibe.

Nach Schritt **a.** wird in Schritt **c.** das Werkstück mittels einer Messeinheit eingemessen. Dabei wird (auch) die Bezugsmarke als Referenz verwendet, sodass die Messdaten zu einem hochpräzisen ortsfesten Koordinatensystem des Werkstücks referenziert sind. Aufgenommene Messdaten sind (intrinsisch) zunächst zu der Einmessvorrichtung (also zu dem Maschinen-Koordinatensystem) referenziert. Indem die Lage der Bezugsmarke zu dem Maschinen-Koordinatensystem bekannt ist, sind diese Messdaten zu dem Werkstück referenzierbar.

Es sei darauf hingewiesen, dass die Reihenfolge der Schritte **b.** und **c.** beliebig vertauschbar sind. Beispielsweise ist es vorteilhaft, zunächst das Werkstück einzumessen und dann festzulegen, wo ein geeigneter Ort für eine Bezugsmarke ist. Alternativ oder zusätzlich ist es vorteilhaft für einen Prozessablauf, die Reihenfolge der Schritte entsprechend auszuführen. Jedoch darf das Werkstück nicht aus dem Werkzeugfutter gelöst werden, bevor nicht die Messdaten zu der Bezugsmarke referenziert sind.

In einem anschließenden Verfahren nach Schritt **b.** oder **c.** wird das Werkstück auf ein Beschichten vorbereitet. Beispielsweise wird die Behandlungsoberfläche gereinigt und/oder aufgeraut, sodass die Veredelungsschicht aufgetragen wird. Bevorzugt wird das Einmessverfahren und das Beschichtungsverfahren (mit oder ohne Umspannen) auf derselben Werkzeugmaschine ausgeführt.

Gemäß einem weiteren Aspekt wird ein Beschichtungsverfahren für ein Werkstück nach einer Ausführungsform gemäß der obigen Beschreibung vorgeschlagen, aufweisend die folgenden Schritte in der genannten Reihenfolge:
**1.)**Einspannen in ein Werkzeugfutter, ein Werkstück mit einer Behandlungsoberfläche zum Beschichten mit einer Veredelungsschicht;
**2.)**Erfassen der Bezugsmarke, wobei bevorzugt die Bezugsmarke in einem Einmessverfahren nach einer Ausführungsform gemäß der obigen Beschreibung erzeugt ist, und Referenzieren der Bezugsmarke zu dem Werkzeugfutter; und
**3.)**Auftragen einer Veredelungsschicht auf der Behandlungsoberfläche des Werkstücks referenziert zu der in Schritt **2.**) erfassten Bezugsmarke,
wobei bevorzugt die Bezugsmarke während Schritt **3.**) dauerhaft erfasst wird und eine Lageveränderung der Bezugsmarke relativ zu dem Werkzeugfutter überwacht wird.

Hier ist nun ein Beschichtungsverfahren vorgeschlagen, wobei dabei ein Werkstück mit einer Veredelungsschicht beschichtet wird. Es wird ohne Ausschluss der Allgemeinheit rein der Übersichtlichkeit halber insoweit auf die obige Beschreibung des Verfahrens mit Bezug auf das dort beschriebene Werkstück mit einer zu beschichtenden Behandlungsoberfläche verwiesen.

In Schritt **1.)** wird das Werkstück in ein Werkzeugfutter derart eingespannt, dass die Behandlungsoberfläche des Werkstücks mit einer Veredelungsschicht in einem späteren Schritt beschichtbar ist. Beispielsweise ist das Werkstück so eingespannt, dass das Beschichten aus mehreren Raumrichtungen ermöglicht ist. Infolge von beispielsweise komplexen Geometrien des Werkstücks ist oftmals eine umlaufende Bearbeitbarkeit des Werkstücks nötig. Die Behandlungsoberfläche des Werkstücks ist in einem vorhergehenden Schritt derart vorbereitet worden, dass eine vorbestimmte Oberflächengüte bereitgestellt ist.

In einem anschließenden Schritt **2.)** wird die Bezugsmarke erfasst und zu dem Werkzeugfutter referenziert. Beim Referenzieren wird das externe (Maschinen-) Koordinatensystem des Werkzeugfutters eingerichtet, sodass bei jedem Erfassen von einer Mehrzahl von Werkstücken und/oder bei einem wiederholten Beschichtungsverfahren bei dem gleichen Werkstück das gleiche Messergebnis darstellbar ist. Zum Erfassen der Bezugsmarke ist ein (beispielsweise optischer) Messsensor bevorzugt eine Mehrzahl von (beispielsweise optischen) Messsensoren vorgesehen, sodass die Bezugsmarke während des Beschichtungsverfahrens erfasst wird.

In einer Ausführungsform wird die Bezugsmarke in Schritt **2.)** zunächst erzeugt, und ist dann oder wird dann mit dem Werkzeugfutter referenziert. Beispielsweise erfolgt die Erzeugung der Bezugsmarke mittels eines Schneidwerkzeugs während Schritt **2.),** sodass dieses dann anschließend oder gleichzeitig erfasst wird. Es sei darauf hingewiesen, dass ein Schneidwerkzeug beispielsweise für eine spanende Bearbeitung, Laserstrahlbearbeitung und/oder Wasserstrahlbearbeitung eingerichtet ist.

In einer bevorzugten Ausführungsform wird die Bezugsmarke mittels eines Einmessverfahrens erzeugt. Es wird ohne Ausschluss der Allgemeinheit rein der Übersichtlichkeit halber auf die obige Beschreibung des Einmessverfahrens verwiesen. Gleichzeitig zu dem Erfassen der Bezugsmarke, wird diese zu dem Werkzeugfutter referenziert, sodass wiederholbare Messergebnisse darstellbar sind.

In einem anschließenden Schritt **3.)** wird eine Veredelungsschicht auf die Behandlungsoberfläche des Werkstücks beziehungsweise des Trägerkörpers aufgetragen, wobei das Auftragen referenziert zu der Bezugsmarke erfolgt. Aufgrund des Referenzieren mittels der Bezugsmarke, welche in Schritt **2.)** erfasst wurde, und dem Werkzeugfutter erfolgt das Auftragen in einer wiederholbaren vorbestimmten Geometrie, sodass die Veredelungsschicht vergleichmäßigt und zielgerichtet in Schritt **3.)** auf die Behandlungsoberfläche aufgetragen wird.

In einer Ausführungsform wird ein Beschichtungsmaterial der Veredelungsschicht mittels Hochgeschwindigkeitsflammspritzen [HVOF] auf die Behandlungsoberfläche aufgebracht. In einer Ausführungsform wird das Beschichtungsmaterial der Veredelungsschicht als Draht bereitgestellt und in einem Lichtbogen-Draht-Auftragschweißen aufgetragen. Alternativ wird das Beschichtungsmaterial als Pulver bereitgestellt und in einem Lichtbogen-Pulver-Auftragschweißen aufgetragen. Dabei wird das Beschichtungsmaterial mittels eines Lichtbogens aufgeschmolzen und die Schmelze wird dann auf die Behandlungsoberfläche aufgetragen, sodass eine Beschichtung beziehungsweise die Veredelungsschicht gebildet wird. In einer Ausführungsform wird Extremhochgeschwindigkeits-Laserauftragschweißen [EHLA] mit einer pulverförmigen Materialzufuhr und einem oberhalb der Behandlungsoberfläche fokussierten Auftragslaser eingesetzt. In einer Ausführungsform sind mehrere Verfahren miteinander kombiniert.

Es sei darauf hingewiesen, dass in beiden Ausführungsformen das Auftragen der Veredelungsschicht mittels eines Referenzieren der Bezugsmarke zu dem Werkzeugfutter erfolgt.

In einer bevorzugten Ausführungsform wird während Schritt **3.)** die Bezugsmarke dauerhaft erfasst, sodass eine Lageveränderung der Bezugsmarke relativ zu dem Werkzeugfutter über die Zeit des Auftragens überwacht wird. Beim Auftragen der Veredelungsschicht werden eventuelle Auftragsfehler mittels der Erfassung der Bezugsmarke besonders bevorzugt einer Mehrzahl von Bezugsmarken überwacht, sodass aufgrund der Veränderung der räumlichen Anordnung der Bezugsmarke relativ zu dem Werkzeugfutter die Auftragsfehler überwacht, und bevorzugt im laufenden Prozess korrigiert werden. Die zum Erfassen der Bezugsmarke in Schritt **2.**) eingerichtete Mehrzahl von Sensoren sind dabei derart angeordnet, dass ein 2,5-Dimensionales-Modell und/oder 3-Dimensionales-Modell der Bezugsmarke beziehungsweise (in Referenz zu dem Werkzeugfutter) des Werkstücks erfassbar ist. Mittels der Erfassung der Bezugsmarke beziehungsweise deren Veränderung beim Auftragen ist eine erhöhte Genauigkeit beim Auftragen der Veredelungsschicht auf die Behandlungsoberfläche gegeben und/oder eine dauerhafte Referenzierbarkeit der eingemessenen Informationen über das Werkstück.

Es sei darauf hingewiesen, dass das Beschichtungsverfahren analog auch für ein Drehverfahren und/oder ein Schleifverfahren oder andere Bearbeitungen von Werkstücken einsetzbar ist. Dann ist Schritt **3.**) entsprechend das Auftragen einer Veredelungsschicht auf der Behandlungsoberfläche (des Werkstücks referenziert zu der in Schritt **2.)** erfassten Bezugsmarke) durch Abdrehen beziehungsweise Abschleifen von Material der Behandlungsoberfläche (des Werkstücks referenziert zu der in Schritt **2.)** erfassten Bezugsmarke) zu ersetzen.

Gemäß einem weiteren Aspekt wird ein Wiederaufbereitungsverfahren für ein Werkstück mit einer verschlissenen Veredelungsschicht nach einer Ausführungsform gemäß der obigen Beschreibung vorgeschlagen, aufweisend die folgenden Schritte in der genannten Reihenfolge:
**i**. Einspannen eines Werkstücks mit einer verschlissenen Veredelungsschicht in ein Werkzeugfutter, wobei bevorzugt die nun verschlissene Veredelungsschicht mittels eines Beschichtungsverfahrens nach einer Ausführungsform gemäß der obigen Beschreibung erzeugt worden ist;
**ii**. Erfassen der Bezugsmarke, wobei bevorzugt die Bezugsmarke in einem Einmessverfahren nach einer Ausführungsform gemäß der obigen Beschreibung vor dem oder zum Zeitpunkt der Erzeugung der nun verschlissenen Veredelungsschicht erzeugt ist, und Referenzieren der Bezugsmarke zu dem Werkzeugfutter; und
**iii.** Entfernen der verschlissenen Veredelungsschicht und Aufbereiten der Behandlungsoberfläche;
**iv**.Auftragen einer neuen Veredelungsschicht auf der in Schritt iii. aufbereiteten Behandlungsoberfläche des Werkstücks referenziert zu der in Schritt ii. erfassten Bezugsmarke.

Es wird im Folgenden auf die Veredelungsschicht, das Beschichtungsverfahren und das Einmessverfahren ohne Ausschluss der Allgemeinheit Bezug genommen und auf die jeweilige obige Beschreibung verwiesen. Aufgrund der Korrosionsbeständigkeit der Veredelungsschicht ist der Trägerkörper des Werkstücks vor Verwitterung geschützt, sodass im Sinne der Nachhaltigkeit und um Kosten einzusparen, hier ein Wiederaufbereitungsverfahren vorgeschlagen ist. Mittels des Wiederaufbereitungsverfahrens ist eine Entfernung einer verschlissenen Veredelungsschicht und Neuauftragung einer Veredelungsschicht auf die Behandlungsoberfläche des Werkstücks darstellbar.

In einem Schritt i. wird das Werkstück in ein Werkzeugfutter eingespannt, wobei das Werkstück eine verschlissene Veredelungsschicht umfasst. Die verschlissene Veredelungsschicht ist in einer Ausführungsform eine konventionelle Veredelungsschicht, welche als Komponente eines zugekauften Werkstücks ausgeführt ist.

In einer bevorzugten Ausführungsform ist die nun verschlissene Veredelungsschicht mittels des Beschichtungsverfahrens nach der obigen Beschreibung auf die Behandlungsoberfläche des Werkstücks aufgetragen worden. Beispielsweise hat die Veredelungsschicht ihre vorbestimmte Lebensdauer erreicht oder bereits überschritten, sodass die minimale Schichtdicke der Veredelungsschicht erreicht und/oder unterschritten ist.

In einem anschließenden Schritt **ii.** wird die Bezugsmarke, welche vor dem oder zum Zeitpunkt der Erzeugung der nun verschlissenen Veredelungsschicht erzeugt wurde, erfasst und zu dem Werkzeugfutter referenziert. In einer Ausführungsform wird die Bezugsmarke erst in Schritt **ii.** des Wiederaufbereitungsverfahrens erzeugt. Beispielsweise ist ein konventionelles Werkstück mit einer Veredelungsschicht derart ausgeführt, dass das Werkstück frei von einer Bezugsmarke ist, sodass diese in Schritt **ii.** des Wiederaufbereitungsverfahrens erzeugt wird.

In einer bevorzugten Ausführungsform ist die Bezugsmarke vor dem oder zum Zeitpunkt der Erzeugung der Veredelungsschicht in dem Einmessverfahren erzeugt worden, beispielsweise in Schritt **b.** des oben beschriebenen Einmessverfahrens. In dieser Ausführungsform ist mittels der Bezugsmarke, welche vor dem oder zum Zeitpunkt der Erzeugung der Veredelungsschicht gesetzt wurde, eine messtechnisch genauere Erfassung der verschlissenen Veredelungsschicht ausführbar, sodass in einem späteren Schritt **iii.** die Entfernung zielgerichtet ausführbar ist, das heißt weniger Verschnitt an dem Trägerkörper erzielbar ist. Alternativ oder zusätzlich ist zum Erlernen von Langzeiteffekten die Auftragsqualität mit dem Verschleißbild vergleichbar. Beispielsweise kann dann festgestellt werden, ob eine Toleranzvorgabe unzureichend war oder sogar eine Toleranzgrenze eine Überdimensionierung darstellt. In einer Ausführungsform ist (vor allem bei einer gesetzlich vorgeschriebenen maximalen Lebensdauer) feststellbar, ob zumindest ein Teil der Veredelungsschicht noch ausreichend in Takt ist und wiederverwendet werden kann. In einer Ausführungsform wird mittels eines Auftragverfahrens ein abgetragener Anteil von Material des Trägerkörpers zumindest zu einem notwendigen Anteil wieder aufgetragen. Damit ist zumindest stellenweise eine neue Behandlungsoberfläche geschaffen.

Anschließend an Schritt **ii.** wird in Schritt **iii.** die verschlissene Veredelungsschicht (also zumindest des verschlissenen Anteils oder insgesamt) entfernt, sodass die Behandlungsoberfläche des Werkstücks freigelegt wird. Die Behandlungsoberfläche wird während der Entfernung oder danach, aber immer noch im Schritt **iii.,** derart aufbereitet, dass die Behandlungsoberfläche zur Aufnahme einer (neue) Veredelungsschicht aufnehmbar ist. Es sei darauf hingewiesen, dass die Behandlungsoberfläche nicht zwangsläufig die gleiche oder art-gleiche ist, wie bei einem Neuzustand eines (unbeschichteten) Trägerkörpers. Vielmehr ist beispielsweise ein Teil der alten Veredelungsschicht noch erhalten beziehungsweise im Gegenteil eine Schicht des Materials des Trägerkörpers abgetragen und somit eine neue Behandlungsoberfläche gebildet.

In einer Ausführungsform wird die verschlissene Veredelungsschicht mittels eines Ätzprozesses derart abgetragen, dass die verschlissene Veredelungsschicht von dem Werkstück entfernt ist und zeitgleich die Behandlungsoberfläche eine vorbestimmte Oberflächengüte beziehungsweise Rauigkeit aufweist.

In einer bevorzugten Ausführungsform wird die verschlissene Veredelungsschicht mittels eines Druckluftstrahlens besonders bevorzugt mittels Karbidstrahlen entfernt, und besonders bevorzugt damit zugleich die Behandlungsoberfläche aufbereitet.

In beiden Ausführungsformen wird die verschlissene Veredelungsschicht derart entfernt, dass kein oder nur ein sehr geringer Anteil des Trägerkörpers von dem Werkstück (mit-)entfernt wird, sodass nach der Entfernung der Veredelungsschicht das Werkstück beziehungsweise dessen Trägerkörper frei von der verschlissenen Veredelungsschicht ist. Es sei darauf hingewiesen, dass in beiden Ausführungsformen die Behandlungsoberfläche mittels der angewandten Abtragverfahren, gleichzeitig oder im Anschluss an das Entfernen wieder derart aufbereitet werden, dass ein erneutes Auftragen einer (neuen) Veredelungsschicht ausführbar ist. Das Entfernen erfolgt mittels der Bezugsmarke und des Referenzieren derart zielgerichtet, dass Material von dem Trägerkörper nur minimal bis gar nicht mitabgetragen wird.

In Schritt **iv.** wird eine neue Veredelungsschicht auf die aufbereitete Behandlungsoberfläche des Werkstücks aufgetragen, wobei das Auftragen der Veredelungsschicht zu der erfassten Bezugsmarke referenziert erfolgt. In einer Ausführungsform wird die Veredelungsschicht mittels eines konventionellen Auftragverfahrens aufgetragen, wobei die Bezugsmarke zum Referenzieren mit dem Werkzeugfutter in Schritt **ii.** derart ausgeführt wird, dass ein hochpräzises Auftragen der (neuen) Veredelungsschicht erfolgt.

In einer bevorzugten Ausführungsform wird die (neue) Veredelungsschicht mittels eines Beschichtungsverfahrens nach der obigen Beschreibung ausgeführt. Es sei darauf hingewiesen, dass auch hier die in Schritt **ii.** erfasste Bezugsmarke mit dem Werkzeugfutter zum Referenzieren verwendet wird. Damit ist ebenfalls ein hochpräzises Auftragen der Veredelungsschicht auf der Behandlungsoberfläche erfolgt.

Es wird weiterhin in einer vorteilhaften Ausführungsform des Wiederaufbereitungsverfahrens vorgeschlagen, dass in einem Schritt **v.** vor Schritt **iii.** der Zustand der verschlissenen Veredelungsschicht erfasst wird, referenziert zu derjenigen Bezugsmarke, welche in einem Einmessverfahren nach einer Ausführungsform gemäß der obigen Beschreibung vor dem oder zum Zeitpunkt der Erzeugung der nun verschlissenen Veredelungsschicht erzeugt ist.

Hier ist nun vorgeschlagen, dass in Schritt **v.,** welcher vor Schritt **iii.** des Wiederaufbereitungsverfahrens ausgeführt wird, der Zustand der verschlissenen Veredelungsschicht erfasst wird. Beispielsweise ist aufgrund von ungleichmäßigen mechanischen und/oder thermischen Belastungen die Veredelungsschicht in unterschiedlichen Bereichen unterschiedlich abgetragen, sodass beim Entfernen in Schritt **iii.** des Wiederaufbereitungsverfahrens einige Prozessparameter beispielsweise die Bearbeitungszeit und/oder der Bestrahlungswinkel variiert werden.

Daher wird in Schritt **v.** mittels der Bezugsmarke der Zustand der Veredelungsschicht erfasst und das Entfernen in Schritt **iii.** dementsprechend angepasst. Die Bezugsmarke ist dabei in einem Einmessverfahren vor dem oder zum Zeitpunkt der Erzeugung der nun verschlissenen Veredelungsschicht erzeugt worden, sodass der Zustand der Veredelungsschicht mit Referenzieren der Bezugsmarke ermittelt wird.

In einer Ausführungsform ist die Bezugsmarke auf der Veredelungsschicht aufgetragen, sodass mittels der Höhendifferenz zwischen dem Werkzeugfutter und der Bezugsmarke der Verschleiß in Schritt **v.** ermittelt wird.

In einer alternativen Ausführungsform ist anhand der Tiefe der Bezugsmarke der Verschleiß der Veredelungsschicht ermittelt, sodass bei bekannter Soll-Schichtstärke der Veredelungsschicht die Bearbeitungszeit beim Entfernen in Schritt v. ermittelt wird.

Es wird weiterhin in einer vorteilhaften Ausführungsform des Wiederaufbereitungsverfahrens vorgeschlagen, dass die Veredelungsschicht gebildet ist mittels Extremhochgeschwindigkeits-Laserauftragschweißen.

Um das Auftragen der Veredelungsschicht auf das Werkstück in Schritt iv. des Wiederaufbereitungsverfahrens auszuführen, ist hier vorgeschlagen, dass das Auftragen mittels Extremhochgeschwindigkeits-Laserauftragschweißen erfolgt. Beim Extremhochgeschwindigkeits-Laserauftragschweißen wird mittels Aufschmelzen und gleichzeitigem Aufbringen eines nahezu beliebigen Materials ein Oberflächenauftrag beziehungsweise Veredelungsschicht geschaffen, wobei die Wärmequelle zum Aufschmelzen ein Laser mit hoher Leistung darstellt.

In einer Ausführungsform wird die Veredelungsschicht aus metallischem Pulver und/oder Hartstoffe beispielsweise keramischen Pulverwerkstoffen mittels Extremhochgeschwindigkeits-Laserauftragschweißen auf die Behandlungsoberfläche aufgebracht und fest beziehungsweise stoffschlüssig mit dem Trägerkörper verbunden.

Es sei darauf hingewiesen, dass das Extremhochgeschwindigkeits-Laserauftragschweißen in einem Schritt **iv.** eine vorteilhafte Ausführungsform darstellt und keines weiteren Verfahrens benötigt.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Werkstück in einer Ausführungsform als Bremsscheibe;
- Fig. 2:: ein Flussdiagramm eines Wiederaufbereitungsverfahrens; und
- Fig. 3:: ein Kraftfahrzeug mit Bremsscheiben.

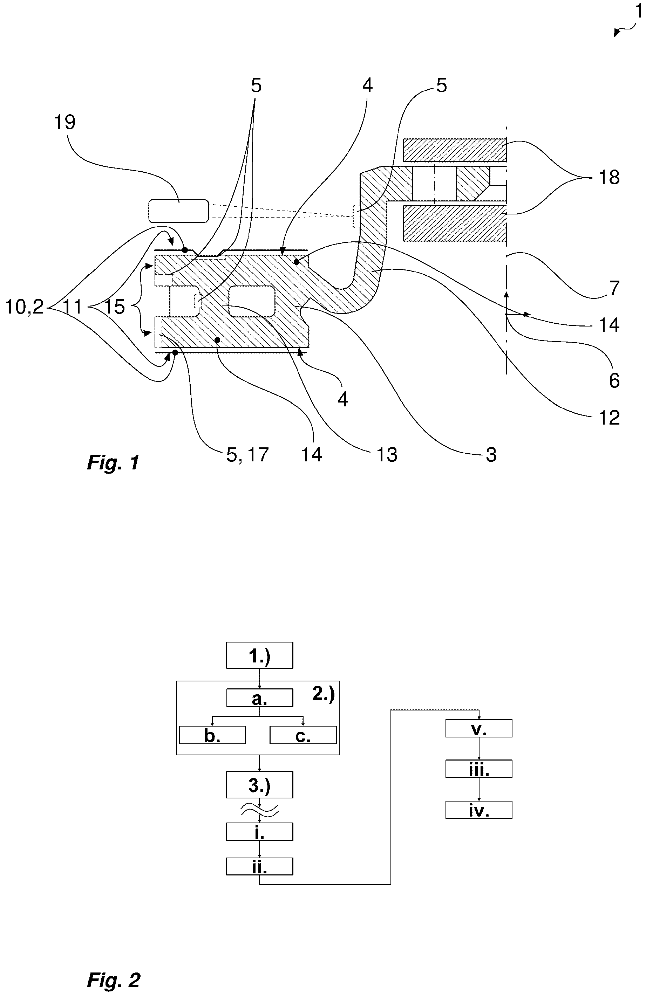

In Fig. 1 ist ein Werkstück **1** in einer Ausführungsform als Bremsscheibe **8** in einer Schnittansicht gezeigt. Das Werkstück **1** ist rotationssymmetrisch um eine Rotationsachse **7** angeordnet und axial in einem Werkzeugfutter **18** eingespannt. Das Werkzeugfutter **18** umfasst ein ortsfestes Koordinatensystem **6,** welches zum Referenzieren in einem Einmessverfahren (vergleiche Fig. 2) eingerichtet ist. Die Bremsscheibe 8 ist vom Werkzeugfutter **18** in radialer Richtung derart ausgeführt, dass mittels eines Schwanenhalses **12** der eingespannte Teil der Bremsscheibe **8** mit einer Mehrzahl (hier beispielsweise zwei) Reibscheibe **14**(n) (hier nach unten abgesetzt) fest verbunden ist. In dieser Ausführungsform ist der Schwanenhals **12** mit den Reibscheiben **14** und dem eingespannten Teil der Bremsscheibe 8 einstückig gefertigt.

Der Schwanenhals **12** ist dabei von einem Trägerkörper **3** des Werkstücks **1** umfasst. Der Trägerkörper **3** bildet in dieser Ausführungsform den mechanisch tragenden Teil der Bremsscheibe **8,** wobei die Oberfläche des Trägerkörpers **3** eine Behandlungsoberfläche **4** umfasst. Die Behandlungsoberfläche **4** ist zur Aufnahme einer Veredelungsschicht **2** eingerichtet. Beispielsweise ist die Behandlungsoberfläche **4** in einem Beschichtungsverfahren (vergleiche Fig. 2) mit einer Veredelungsschicht **2** fest verbunden worden. Die Veredelungsschicht **2** ist in dieser Ausführungsform derart ausgebildet, dass diese eine Hartstoffschicht **10** ausbildet und damit eine Reibfläche **11** der Bremsscheibe **8** definiert. Die Bremsscheibe **8** ist radial-außen von einem Außenrand **15** begrenzt. Die Reibflächen **11** sind zur Drehmomentaufnahme eines Verzögerungsvorgangs mittels eines Bremsklotzes eingerichtet. Bei der Verzögerung entsteht in kurzer Zeit eine große Wärmemenge aufgrund der Umwandlung von kinetischer Energie in thermische Energie. Die Veredelungsschicht **2** ist derart eingerichtet, dass der Abrieb aufgrund der mechanischen Belastung verringert ist.

In diesem Ausführungsbeispiel liegt die Bremsscheibe **8** in einer innen-gekühlten Ausführungsform vor, sodass die zwei Reibscheiben **14** parallel entlang der Rotationsachse **7** angeordnet sind und mittels Lüftungsrippen **13** fest verbunden sind. Die Lüftungsrippen **13** sind zum Abtransport der beim Verzögerungsvorgang entstehende Wärmemenge eingerichtet.

Das Werkstück **1** umfasst in diesem Ausführungsbeispiel eine Mehrzahl von Bezugsmarken **5,** wobei eine Bezugsmarke **5** am Schwanenhals **12** angeordnet ist. Eine weitere Bezugsmarke **5** ist in die Veredelungsschicht **2** vertiefend eingebracht, sodass die Bezugsmarke **5** unterhalb der Veredelungsschicht **2** in dem Trägerkörper **3** angeordnet ist, wobei die Veredelungsschicht **2** zumindest teilweise die Bezugsmarke **5** überdeckt. Eine weitere Bezugsmarke **5** ist an dem Außenrand **15** sowie an einer Lüftungsrippe **13** angeordnet. In diesem Ausführungsbeispiel ist eine weitere Bezugsmarke **5** als eine Wuchtungsmarke **17** ausgeführt und außerhalb der Reibflächen **11** an dem Außenrand **15** angeordnet.

In diesem Ausführungsbeispiel ist eine Messeinheit **19** außerhalb der Bremsscheibe **8** derart angeordnet, dass diese zum Erfassen der Bezugsmarke **5** an dem Schwanenhals **12** der Bremsscheibe **8** eingerichtet ist.

In Fig. 2 ist ein Flussdiagramm eines Wiederaufbereitungsverfahrens dargestellt. Dabei ist dem Wiederaufbereitungsverfahren ein Beschichtungsverfahren mit einem Einmessverfahren vorweg gestellt, sodass diese beiden Verfahren hier nun auch beschrieben werden. Es wird ohne Ausschluss der allgemein auf das Werkstück **1** in Fig. 1 Bezug genommen und insoweit auf die dortige Beschreibung verwiesen.

In Schritt **1.)** des Beschichtungsverfahrens wird das Werkstück **1** in ein Werkzeugfutter **18** derart eingespannt, dass die Behandlungsoberfläche **4** des Werkstücks **1** mit einer Veredelungsschicht **2** in einem späteren Schritt beschichtet wird.

In Schritt **2.)** ist neben dem Beschichtungsverfahren das Einmessverfahren ausführbar, sodass in diesem Ausführungsbeispiel gleichzeitig zu Schritt **2.)** des Beschichtungsverfahrens, Schritt **a.** des Einmessverfahrens, ausgeführt wird. In Schritt **a.** des Einmessverfahrens wird das Werkstück **1** in ein Werkzeugfutter **18** eingespannt beziehungsweise ist bereits in Schritt **1.)** in das Werkzeugfutter **18** eingespannt.

Nach Schritt **a.** wird in Schritt **b.** die Bezugsmarke **5** erfasst. In einer Ausführungsform ist die Bezugsmarke **5** bereits in einem vorherigen Schritt **b1.** in das Werkstück **1** eingebracht worden und wird nun in Schritt **b2.** erfasst.

Es sei darauf hingewiesen, dass die Bezugsmarke **5** in beiden Ausführungsformen zu dem Werkzeugfutter **18** in Referenz gesetzt ist, wobei das Werkzeugfutter **18** ein externes (Maschinen-) Koordinatensystem **6** umfasst. Mittels des Werkzeugfutters **18** und der dazu angeordneten Bezugsmarke **5** ist also ein wiederholbares Referenzieren des Werkstücks **1** an einer Messeinheit **19** ausführbar.

Nach Schritt **a.** wird in Schritt **c.** das Werkstück **1** mittels einer Messeinheit **19** eingemessen. Dabei wird die Bezugsmarke **5** als Referenz verwendet, sodass das Werkstück **1** zu einem hochpräzisen ortsfesten Koordinatensystem **6** zum Einmessen referenzierbar ist. In einer Ausführungsform wird die Bezugsmarke **5** als Ausgangspunkt des Einmessens mittels der Messeinheit **19** verwendet. Es sei darauf hingewiesen, dass die Reihenfolge der Schritte **b.** und **c.** beliebig vertauschbar sind.

In einem anschließenden Schritt **3.)** wird eine Veredelungsschicht **2** auf die Behandlungsoberfläche **4** des Werkstücks **1** beziehungsweise des Trägerkörpers **3** aufgetragen, wobei das Auftragen referenziert zu der Bezugsmarke **5** erfolgt. Aufgrund des Referenzieren mittels der Bezugsmarke **5,** welche in Schritt **2.)** erfasst wurde, und dem Werkzeugfutter **18** erfolgt das Auftragen in einer wiederholbaren vorbestimmten Geometrie, sodass die Veredelungsschicht **2** exakt gesteuert in Schritt **3.)** auf die Behandlungsoberfläche **4** aufgetragen wird.

Das Werkstück **1** ist nun nach Schritt **3.)** des Beschichtungsverfahrens für den Betrieb bereitgestellt. Im Betrieb erfährt das Werkstück **1** einen Verschleiß der Veredelungsschicht **2,** sodass diese in einem anschließenden aber zeitlich späteren Zeitpunkt (am Ende der Lebensdauer des Werkstücks **1)** ein Wiederaufbereitungsverfahren durchläuft.

In Schritt **i.** des Wiederaufbereitungsverfahrens wird das Werkstück **1** erneut in das Werkzeugfutter **18** eingespannt, wobei das Werkstück **1** eine nun verschlissene Veredelungsschicht **2** umfasst.

In einem anschließenden Schritt **ii.** wird die Bezugsmarke **5,** welche vor dem oder zum Zeitpunkt der Erzeugung der nun verschlissenen Veredelungsschicht **2** erzeugt wurde, erfasst und zu dem Werkzeugfutter **18** referenziert.

Hier ist nun vorgeschlagen, dass in Schritt **v.,** welcher vor Schritt **iii.** ausgeführt wird, der Zustand der verschlissenen Veredelungsschicht **2** erfasst wird. Beispielsweise ist aufgrund von ungleichmäßigen mechanischen und/oder thermischen Belastungen die Veredelungsschicht **2** in unterschiedlichen Bereichen unterschiedlich abgetragen, sodass beim Entfernen in Schritt **iii.** des Wiederaufbereitungsverfahrens einige Prozessparameter variiert werden. Daher wird in Schritt **v.** mittels der Bezugsmarke **5** der Zustand der Veredelungsschicht **2** erfasst und das Entfernen in Schritt **iii.** dementsprechend angepasst.

Anschließend an Schritt **v.** wird in Schritt **iii.** die verschlissene Veredelungsschicht **2** entfernt, sodass die Behandlungsoberfläche **4** des Werkstücks **1** freigelegt wird. Die Behandlungsoberfläche **4** wird während der Entfernung oder danach, aber immer noch im Schritt **iii.,** derart aufbereitet, dass die Behandlungsoberfläche **4** zur Aufnahme einer (neue) Veredelungsschicht **2** aufnehmbar ist. Das Entfernen der verschlissenen Veredelungsschicht **2** erfolgt mittels der Bezugsmarke **5** und des Referenzieren derart zielgerichtet, dass der Trägerkörper **3** nur minimal bis gar nicht mitabgetragen wird.

In Schritt **iv.** wird eine neue Veredelungsschicht **2** auf die aufbereitete Behandlungsoberfläche **4** des Werkstücks **1** aufgetragen, wobei das Auftragen der Veredelungsschicht **2** zu der erfassten Bezugsmarke **5** referenziert erfolgt. Es sei darauf hingewiesen, dass das Auftragen der Veredelungsschicht **2** bevorzugt nach dem oben beschriebenen Beschichtungsverfahren erfolgt.

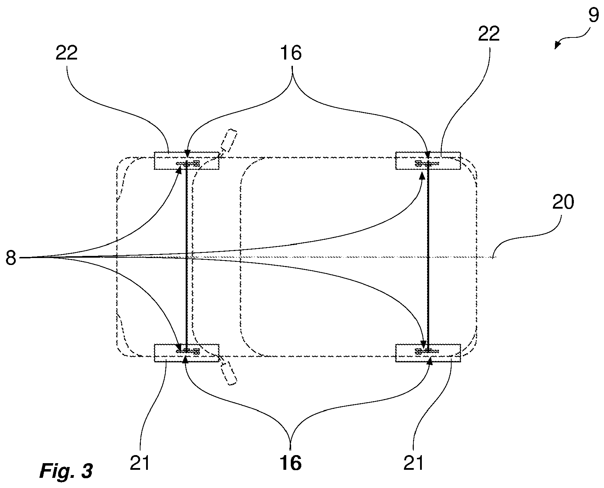

In Fig. 3 ist ein Kraftfahrzeug **9** mit Bremsscheiben **8** nach Fig. 1 in einer schematischen Draufsicht gezeigt. Das Kraftfahrzeug **9** weist eine Längsachse **20** auf und zum Vortrieb eingerichtete Vortriebsräder **21,22.** Das linke Vortriebsrad **21** und das rechte Vortriebsrad **22** sind zur Drehmomentabgabe an den Untergrund eingerichtet und über eine Radnabe **16** mit dem Kraftfahrzeug **9** verbunden. Die Bremsscheiben **8** sind zum Verzögern des Vortriebs eingerichtet, also zur Drehmomentaufnahme der Vortriebsräder **21,22.** Die Bremsscheiben **8** sind mit den Radnaben **16** fest verbunden und zwischen den Vortriebsrädern **21,22** und der Radnabe **16** angeordnet. Jede Bremsscheibe **8** ist zum Umwandeln der kinetischen Energie in thermische Energie eingerichtet. Mittels der Veredelungsschicht **2** ist der Abrieb der Bremsscheiben **8** beim Verzögern vermindert und/oder ein Korrosionsschutz gegeben.

Mit dem hier vorgeschlagenen Werkstück und der zugehörigen Bezugsmarke ist ein hochpräzises Auftragen und Wiederaufbereiten einer Veredelungsschicht auf dem Werkstück ausführbar.

### Bezugszeichenliste

- 1: Werkstück
- 2: Veredelungsschicht
- 3: Trägerkörper
- 4: Behandlungsoberfläche
- 5: Bezugsmarke
- 6: Koordinatensystem
- 7: Rotationsachse
- 8: Bremsscheibe
- 9: Kraftfahrzeug
- 10: Hartstoffschicht
- 11: Reibfläche
- 12: Schwanenhals
- 13: Lüftungsrippe
- 14: Reibscheibe
- 15: Außenrand
- 16: Radnabe
- 17: Wuchtungsmarke
- 18: Werkzeugfutter
- 19: Messeinheit
- 20: Längsachse
- 21: linkes Vortriebsrad
- 22: rechtes Vortriebsrad

## Patentansprüche

1. Werkstück (1) zum Beschichten mit einer Veredelungsschicht (2), wobei das Werkstück (1) einen Trägerkörper (3) mit einer Behandlungsoberfläche (4) aufweist, wobei auf der Behandlungsoberfläche (4) die Veredelungsschicht (2) aufbringbar ist oder aufgebracht ist,
**dadurch gekennzeichnet, dass**
auf dem Werkstück (1) eine Bezugsmarke (5) vorgesehen ist, zu welcher wiederholbar ein zu dem Werkstück (1) hochpräzises ortsfestes Koordinatensystem (6), also eine Bestimmung einer Koordinate auf dem Werkstück zumindest im Bereich der Behandlungsoberfläche auf unter 1 mm in der Ebene und unter 10 µm genau wiederholbar, bestimmbar ist.

2. Werkstück (1) nach Anspruch 1, wobei das Werkstück (1) ein Rotationswerkstück mit einer Rotationsachse (7) ist.

3. Werkstück (1) nach Anspruch 1 oder Anspruch 2, wobei die Veredelungsschicht (2) eine Hartstoffschicht (10) für eine Reibfläche (11) des Werkstücks (1) ist.

4. Werkstück (1) nach einem der vorhergehenden Ansprüche, wobei die Bezugsmarke (5) über eine vorgesehene Lebensdauer des Werkstücks (1) erhalten bleibt.

5. Werkstück (1) nach Anspruch 4, wobei
die Bezugsmarke (5) noch bei einer Wiederaufbereitung des Werkstücks (1) beziehungsweise der Veredelungsschicht (2) erhalten ist.

6. Werkstück (1) nach einem der vorhergehenden Ansprüche, wobei das Werkstück (1) eine Bremsscheibe (8) ist und die Bezugsmarke (5) angeordnet ist an zumindest einem der folgenden Abschnitte der Bremsscheibe (8):
- im Bereich des Schwanenhalses (12);
- im Bereich der Lüftungsrippen (13) zwischen den zwei Reibscheiben (14) der Bremsscheibe (8) in innen-gekühlter Ausführungsform;
- am Außenrand (15) der Bremsscheibe (8);
- an der Radnabe (16) radial-außen oder radial-innen mantel-seitig, axial-innen oder axial-außen stirn-seitig;
- in der Behandlungsoberfläche (4); und
- in einer oder als eine Wuchtungsmarke (17).

7. Einmessverfahren für ein Werkstück (1), aufweisend die folgenden Schritte:
**a**. Einspannen in ein Werkzeugfutter (18), ein Werkstück (1) mit einer Behandlungsoberfläche (4) zum Beschichten mit einer Veredelungsschicht (2);
**b**. Einbringen in dem Werkstück (1) und Erfassen einer Bezugsmarke (5) und Referenzieren der Bezugsmarke (5) zu dem Werkzeugfutter (18); und
**c.** nach Schritt **a.,** Einmessen des Werkstücks (1) mittels einer Messeinheit (19) referenziert zu der Bezugsmarke (5).

8. Beschichtungsverfahren für ein Werkstück (1) nach einem von Anspruch 1 bis Anspruch 6, aufweisend die folgenden Schritte in der genannten Reihenfolge:
**1.**)Einspannen in ein Werkzeugfutter (18), ein Werkstück (1) mit einer Behandlungsoberfläche (4) zum Beschichten mit einer Veredelungsschicht (2);
**2.**)Erfassen der Bezugsmarke (5) und Referenzieren der Bezugsmarke (5) zu dem Werkzeugfutter (18); und
**3**.)Auftragen einer Veredelungsschicht (2) auf der Behandlungsoberfläche (4) des Werkstücks (1) referenziert zu der in Schritt **2.)** erfassten Bezugsmarke (5).

9. Beschichtungsverfahren für ein Werkstück (1) nach Anspruch 8, wobei die Bezugsmarke (5) in einem Einmessverfahren nach Anspruch 7 erzeugt ist.

10. Beschichtungsverfahren für ein Werkstück (1) nach Anspruch 8 oder Anspruch 9, wobei
die Bezugsmarke (5) während Schritt **3.)** dauerhaft erfasst wird und eine Lageveränderung der Bezugsmarke (5) relativ zu dem Werkzeugfutter (18) überwacht wird.

11. Wiederaufbereitungsverfahren für ein Werkstück (1) mit einer verschlissenen Veredelungsschicht (2) nach einem von Anspruch 1 bis Anspruch 6, aufweisend die folgenden Schritte in der genannten Reihenfolge:
**i.** Einspannen eines Werkstücks (1) mit einer verschlissenen Veredelungsschicht (2) in ein Werkzeugfutter (18);
**ii.** Erfassen der Bezugsmarke (5) und Referenzieren der Bezugsmarke (5) zu dem Werkzeugfutter (18); und
**iii.** Entfernen der verschlissenen Veredelungsschicht (2) und Aufbereiten der Behandlungsoberfläche (4);
**iv**.Auftragen einer neuen Veredelungsschicht (2) auf der in Schritt **iii.** aufbereiteten Behandlungsoberfläche (4) des Werkstücks (1) referenziert zu der in Schritt **ii.** erfassten Bezugsmarke (5).

12. Wiederaufbereitungsverfahren nach Anspruch 11, wobei
die nun verschlissene Veredelungsschicht (2) mittels eines Beschichtungsverfahrens nach einem von Anspruch 8 bis Anspruch 10 erzeugt worden ist

13. Wiederaufbereitungsverfahren nach Anspruch 11 oder Anspruch 12, wobei die Bezugsmarke (5) in einem Einmessverfahren nach Anspruch 7 vor dem oder zum Zeitpunkt der Erzeugung der nun verschlissenen Veredelungsschicht (2) erzeugt ist.

14. Wiederaufbereitungsverfahren nach einem von Anspruch 11 bis Anspruch 13, wobei
in einem Schritt **v.** vor Schritt **iii.** der Zustand der verschlissenen Veredelungsschicht (2) erfasst wird, referenziert zu derjenigen Bezugsmarke (5), welche in einem Einmessverfahren nach Anspruch 7 vor dem oder zum Zeitpunkt der Erzeugung der nun verschlissenen Veredelungsschicht (2) erzeugt ist.

15. Wiederaufbereitungsverfahren nach einem von Anspruch 11 bis Anspruch 14, wobei
die Veredelungsschicht (2) gebildet ist mittels Extremhochgeschwindigkeits-Laserauftragschweißen.

## Claims

1. A workpiece (1) for coating with a finishing layer (2), wherein the workpiece (1) comprises a support body (3) having a treatment surface (4), wherein the finishing layer (2) is adapted to be applied or is applied to the treatment surface (4),
**characterized in that**
on the workpiece (1) a reference mark (5) is provided, relative to which a stationary coordinate system (6) that is highly precise relative to the workpiece (1) is repeatably determinable, such that a coordinate on the workpiece at least in a region of the treatment surface is determinable to within less than 1 mm in a plane and repeatably determinable to within less than 10 µm.

2. The workpiece (1) according to claim 1, wherein the workpiece (1) is a rotary workpiece having an axis of rotation (7).

3. The workpiece (1) according to claim 1 or claim 2, wherein the finishing layer (2) is a hard material layer (10) for a friction surface (11) of the workpiece (1).

4. The workpiece (1) according to any one of the preceding claims, wherein the reference mark (5) is configured to be retained over an intended service life of the workpiece (1).

5. The workpiece (1) according to claim 4, wherein the reference mark (5) is still retained when the workpiece (1) or the finishing layer (2) is refurbished.

6. The workpiece (1) according to any one of the preceding claims, wherein the workpiece (1) is a brake disc (8) and the reference mark (5) is arranged on at least one of the following sections of the brake disc (8):
- in a region of a disc neck (12);
- in a region of ventilation ribs (13) between two friction rings (14) of the brake disc (8) in an internally cooled embodiment;
- on an outer rim (15) of the brake disc (8);
- on a wheel hub (16), radially-outside or radially-inside on a circumferential surface, or axially-inside or axially-outside on an axial end face;
- in the treatment surface (4); and
- in or as a balancing mark (17).

7. A method of referencing and measuring a workpiece (1), comprising the following steps:
**a.** clamping, in a tool chuck (18), a workpiece (1) having a treatment surface (4) for coating with a finishing layer (2);
**b.** forming in the workpiece (1) and detecting a reference mark (5), and referencing the reference mark (5) to the tool chuck (18); and
**c.** after step **a.**, measuring the workpiece (1) referenced to the reference mark (5) by means of a measurement unit (19).

8. A method of coating a workpiece (1) according to any one of claim 1 to claim 6, comprising the following steps in the recited order:
**1.)** clamping, in a tool chuck (18), a workpiece (1) having a treatment surface (4) for coating with a finishing layer (2);
**2.)** detecting the reference mark (5) and referencing the reference mark (5) to the tool chuck (18); and
**3.)** applying a finishing layer (2) onto the treatment surface (4) of the workpiece (1) referenced to the reference mark (5) detected in step **2.)**.

9. The method of coating a workpiece (1) according to claim 8, wherein
the reference mark (5) is generated in a method according to claim 7.

10. The method of coating a workpiece (1) according to claim 8 or claim 9, wherein the reference mark (5) is continuously detected during step **3.)** and a change in position of the reference mark (5) relative to the tool chuck (18) is monitored.

11. A method of refurbishing a workpiece (1) having a worn finishing layer (2) according to any one of claim 1 to claim 6, comprising the following steps in the recited order:
**i.** clamping the workpiece (1) with the worn finishing layer (2) in a tool chuck (18);
**ii.** detecting the reference mark (5) and referencing the reference mark (5) to the tool chuck (18);
**iii.** removing the worn finishing layer (2) and preparing the treatment surface (4); and
**iv.** applying a new finishing layer (2) onto the treatment surface (4) of the workpiece (1) prepared in step **iii.**, referenced to the reference mark (5) detected in step **ii**.

12. The method of refurbishing according to claim 11, wherein
the now worn finishing layer (2) has been produced by means of a coating method according to any one of claim 8 to claim 10.

13. The method of refurbishing according to claim 11 or claim 12, wherein the reference mark (5) is generated in a method of referencing and measuring according to claim 7 before or at the time of generation of the now worn finishing layer (2).

14. The method of refurbishing according to any one of claim 11 to claim 13,
wherein
in a step **v.** prior to step **iii.**, a condition of the worn finishing layer (2) is detected, referenced to the reference mark (5) which is generated in a method of referencing and measuring according to claim 7 before or at the time of generation of the now worn finishing layer (2).

15. The method of refurbishing according to any one of claim 11 to claim 14, wherein the finishing layer (2) is formed by means of extreme high-speed laser deposition welding.

## Revendications

1. Pièce (1) pour le revêtement par une couche de finition (2), dans laquelle la pièce (1) comprend un corps de support (3) présentant une surface de traitement (4), dans laquelle la couche de finition (2) est adaptée pour être appliquée ou est appliquée sur la surface de traitement (4),
**caractérisée en ce que**
sur la pièce (1) est prévue une marque de référence (5), par rapport à laquelle un système de coordonnées fixe (6) hautement précis par rapport à la pièce (1) peut être déterminé de manière répétable, c'est-à-dire qu'une coordonnée sur la pièce au moins dans une région de la surface de traitement peut être déterminée à moins de 1 mm près dans un plan et peut être déterminée de manière répétable à moins de 10 µm près.

2. Pièce (1) selon la revendication 1, dans laquelle la pièce (1) est une pièce rotative présentant un axe de rotation (7).

3. Pièce (1) selon la revendication 1 ou la revendication 2, dans laquelle la couche de finition (2) est une couche de matériau dur (10) pour une surface de frottement (11) de la pièce (1).

4. Pièce (1) selon l'une quelconque des revendications précédentes, dans laquelle la marque de référence (5) subsiste pendant une durée de vie prévue de la pièce (1).

5. Pièce (1) selon la revendication 4, dans laquelle la marque de référence (5) est encore conservée lorsque la pièce (1) ou la couche de finition (2) est remise à neuf.

6. Pièce (1) selon l'une quelconque des revendications précédentes, dans laquelle la pièce (1) est un disque de frein (8) et la marque de référence (5) est disposée sur au moins une des sections suivantes du disque de frein (8):
- dans une région d'un col (12) du disque ;
- dans une région de nervures de ventilation (13) entre deux anneaux de frottement (14) du disque de frein (8) dans un mode de réalisation à refroidissement interne;
- sur un bord extérieur (15) du disque de frein (8);
- sur un moyeu de roue (16), radialement à l'extérieur ou radialement à l'intérieur sur une surface circonférentielle, ou axialement à l'intérieur ou axialement à l'extérieur sur une face d'extrémité axiale;
- dans la surface de traitement (4) ; et
- dans ou sous la forme d'une marque d'équilibrage (17).

7. Procédé de mesure d'une pièce (1), comprenant les étapes suivantes:
**a.** serrage, dans un mandrin d'outil (18), d'une pièce (1) présentant une surface de traitement (4) pour le revêtement par une couche de finition (2);
**b.** formation dans la pièce (1) et détection d'une marque de référence (5), et référencement de la marque de référence (5) par rapport au mandrin d'outil (18); et
**c.** après l'étape **a.**, mesure de la pièce (1) référencée par rapport à la marque de référence (5) au moyen d'une unité de mesure (19).

8. Procédé de revêtement d'une pièce (1) selon l'une quelconque des revendications 1 à 6, comprenant les étapes suivantes dans l'ordre indiqué:
**1.)** serrage, dans un mandrin d'outil (18), d'une pièce (1) présentant une surface de traitement (4) pour le revêtement par une couche de finition (2);
**2.)** détection de la marque de référence (5) et référencement de la marque de référence (5) par rapport au mandrin d'outil (18); et
**3.)** application, en référence à la marque de référence (5) détectée à l'étape **2.)**, d'une couche de finition (2) sur la surface de traitement (4) de la pièce (1).

9. Procédé de revêtement d'une pièce (1) selon la revendication 8, dans lequel la marque de référence (5) est générée dans un procédé de mesure d'une pièce (1) selon la revendication 7.

10. Procédé de revêtement d'une pièce (1) selon la revendication 8 ou la revendication 9, dans lequel la marque de référence (5) est détectée en continu pendant l'étape **3.)** et une variation de position de la marque de référence (5) par rapport au mandrin d'outil (18) est surveillée.

11. Procédé de remise à neuf d'une pièce (1) présentant une couche de finition (2) usée selon l'une quelconque des revendications 1 à 6, comprenant les étapes suivantes dans l'ordre indiqué:
**i.** serrage de la pièce (1) avec la couche de finition (2) usée dans un mandrin d'outil (18);
**ii.** détection de la marque de référence (5) et référencement de la marque de référence (5) par rapport au mandrin d'outil (18);
**iii.** élimination de la couche de finition (2) usée et préparation de la surface de traitement (4); et
**iv.** application, en référence à la marque de reference (5) détectée à l'étape **ii.**, d'une nouvelle couche de finition (2) sur la surface de traitement (4) de la pièce (1) préparée à l'étape **iii**.

12. Procédé de remise à neuf selon la revendication 11, dans lequel la couche de finition (2) désormais usée a été produite au moyen d'un procédé de revêtement selon l'une quelconque de revendication 8 à revendication 10.

13. Procédé de remise à neuf selon la revendication 11 ou la revendication 12, dans lequel la marque de référence (5) est générée dans un procédé de mesure selon la revendication 7 avant ou au moment de la formation de la couche de finition (2) désormais usée.

14. Procédé de remise à neuf selon l'une quelconque des revendications 11 à 13, dans lequel, dans une étape **v.** préalable à l'étape **iii.**, un état de la couche de finition (2) usée est détecté, référencé par rapport à la marque de référence (5) qui a été formée dans un procédé de mesure selon la revendication 7 avant ou au moment de la formation de la couche de finition (2) désormais usée.

15. Procédé de remise à neuf selon l'une quelconque des revendication 11 à 14, dans lequel la couche de finition (2) est formée au moyen d'un rechargement par laser à ultra-haute vitesse.
